(19) Europäisches Patentamt / European Patent Office / Office européen des brevets

(11) **EP 4 170 487 A1**

(12) **EUROPEAN PATENT APPLICATION**
published in accordance with Art. 153(4) EPC

(43) Date of publication:
**26.04.2023 Bulletin 2023/17**

(21) Application number: **20941050.5**

(22) Date of filing: **19.06.2020**

(51) International Patent Classification (IPC):
*G06F 9/38* (2018.01)  *G06F 9/50* (2006.01)

(52) Cooperative Patent Classification (CPC):
**G06F 9/38; G06F 9/50**

(86) International application number:
**PCT/JP2020/024186**

(87) International publication number:
**WO 2021/255926 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **FUKUDA, Mitsuaki**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **CONTROL METHOD, INFORMATION PROCESSING DEVICE, AND CONTROL PROGRAM**

(57) In response to a request to generate a predetermined processing result, a computer specifies a second process from among a plurality of processes that each generate the predetermined processing result, based on a relationship between a first process that is being executed by an execution unit of an arithmetic processing device and the plurality of processes. The second process includes a second instruction different from a first instruction included in the first process. The computer controls the execution unit to execute the second process.

## FIG. 7

EP 4 170 487 A1

## Description

FIELD

The present invention relates to a control technique.

BACKGROUND

A central processing unit (CPU) installed in most computers has a parallel processing function that simultaneously executes a plurality of programs. The parallel processing function enables faster program execution by scheduling so as to allow a plurality of programs executed simultaneously to use a plurality of instruction execution units built in the CPU. The CPU is sometimes called a processor, and the instruction execution unit in the CPU is sometimes called an arithmetic unit.

For example, in the hyper-threading technique implemented in Intel's CPU, when two threads are executed simultaneously in one CPU, in a case where there is an instruction execution unit that is not used by one thread, this instruction execution unit is allocated to the other thread. This achieves parallel processing as if two CPUs were executing two threads in parallel even though one CPU is executing two threads.

In this manner, to execute a plurality of programs in parallel, efficiently allocating the instruction execution units built in the CPU to each program is an important technique in the parallel processing.

In relation to the parallel processing, a multithread execution processor capable of minimizing thread exchange overhead is known (see Patent Document 1, for example).

CITATION LIST

PATENT DOCUMENT

Patent Document 1: Japanese Laid-open Patent Publication No. 2019-160352

SUMMARY

[TECHNICAL PROBLEM]

When a plurality of threads is executed in parallel within a CPU, waiting time sometimes occurs in the instruction execution unit built-in the CPU, and speed-up by parallel processing is not necessarily achieved.

Note that such a difficulty arises not only when a plurality of threads is executed in parallel within a CPU, but also when various processes are executed within various arithmetic processing devices.

In one aspect, an object of the present invention is to suppress the occurrence of an instruction waiting to be executed in a process executed by an arithmetic processing device.

[SOLUTION TO PROBLEM]

In one proposal, in response to a request to generate a predetermined processing result, a computer specifies a second process from among a plurality of processes that each generate the predetermined processing result, based on a relationship between a first process that is being executed by an execution unit of an arithmetic processing device and the plurality of processes. The second process includes a second instruction different from a first instruction included in the first process. The computer controls the execution unit to execute the second process.

According to an aspect of the embodiments, a control method to be executed by a computer, includes in response to a request to generate a predetermined processing result, specifying a second process that includes a second instruction different from a first instruction included in a first process that is being executed by an execution unit of an arithmetic processing device, from among a plurality of processes that each generate the predetermined processing result, based on a relationship between the first process and the plurality of processes; and controlling the execution unit to execute the second process.

[ADVANTAGEOUS EFFECTS OF INVENTION]

According to one aspect, the occurrence of an instruction waiting to be executed may be suppressed in a process executed by an arithmetic processing device.

BRIEF DESCRIPTION OF DRAWINGS

FIG. 1 is a diagram illustrating a CPU including a plurality of instruction execution units;
FIG. 2 is a diagram illustrating parallel processing;
FIG. 3 is a diagram illustrating parallel processing in which waiting time occurs;
FIG. 4 is a diagram illustrating processing time when it is assumed that there is no waiting time;
FIG. 5 is a diagram illustrating processing time when there is waiting time;
FIG. 6 is a functional configuration diagram of an information processing device;
FIG. 7 is a flowchart of a control process;
FIG. 8 is a hardware configuration diagram of the information processing device;
FIG. 9 is a hardware configuration diagram of a CPU;
FIG. 10A and FIG. 10B are diagrams illustrating programs that perform a comparison process for biometric feature information;
FIG. 11 is a flowchart of parallel processing;
FIG. 12 is a diagram illustrating a program selection candidate list in an initial state;
FIG. 13 is a flowchart of a first program supplying process;

FIG. 14 is a diagram illustrating the program selection candidate list when two threads are executed in parallel;

FIG. 15 is a diagram illustrating the first program supplying process;

FIG. 16A and FIG. 16B are diagrams illustrating instruction usage frequency tables;

FIG. 17 is a flowchart of a second program supplying process; and

FIG. 18 is a diagram illustrating the second program supplying process.

DESCRIPTION OF EMBODIMENTS

Hereinafter, embodiments will be described in detail with reference to the drawings.

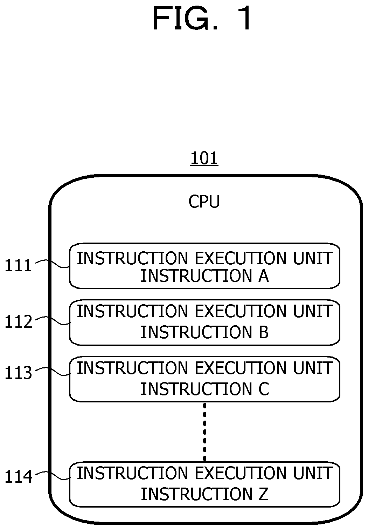

FIG. 1 illustrates an example of a CPU including a plurality of instruction execution units. A CPU 101 in FIG. 1 includes instruction execution units 111 to 114. The instruction execution unit 111 executes an instruction A, the instruction execution unit 112 executes an instruction B, the instruction execution unit 113 executes an instruction C, and the instruction execution unit 114 executes an instruction Z.

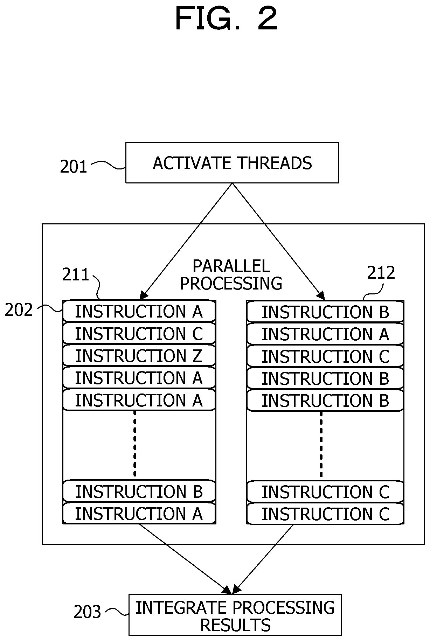

FIG. 2 illustrates an example of parallel processing in the CPU 101 in FIG. 1. The CPU 101 activates threads 211 and 212 in step 201 and executes the threads 211 and 212 in parallel in parallel processing in step 202.

In the parallel processing, the instruction execution units 111 to 114 are allocated to each thread such that the instruction execution units used between the threads 211 and 212 do not overlap. When the parallel processing ends, the CPU 101 integrates the processing results of the threads 211 and 212 in step 203.

In this manner, in a case where there is little overlap of the instruction execution units used by each thread when a plurality of threads is executed in parallel, the plurality of threads is enabled to simultaneously execute instructions, and parallel processing as if a plurality of CPUs was working is achieved.

However, in a case where there is a lot of overlap of the instruction execution units used by each thread and the number of instruction execution units built in the CPU is smaller than the number of threads, while a certain thread uses a specific instruction execution unit, other threads are sometimes put into a waiting state. In this case, the CPU stands by for the execution of instructions of other threads until the specific instruction execution unit is released.

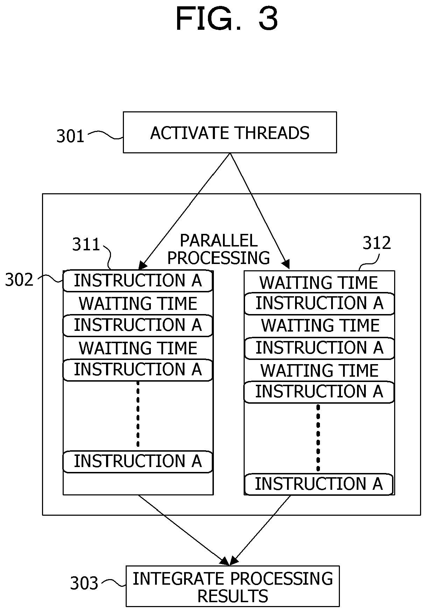

FIG. 3 illustrates an example of parallel processing in which waiting time occurs. The CPU 101 activates threads 311 and 312 in step 301 and executes the threads 311 and 312 in parallel in parallel processing in step 302.

In the parallel processing, the threads 311 and 312 both execute the instruction A only. In this case, the instruction execution unit 111 that executes the instruction A is regularly in a busy state, and while one thread is using the instruction execution unit 111, the other thread is put into a waiting state, causing waiting time to occur. When the parallel processing ends, the CPU 101 integrates the processing results of the threads 311 and 312 in step 303.

In this manner, when two threads repeatedly execute only the same instruction using one instruction execution unit, the processing time taken is doubled compared with a case where two threads are allowed to execute the same instruction simultaneously.

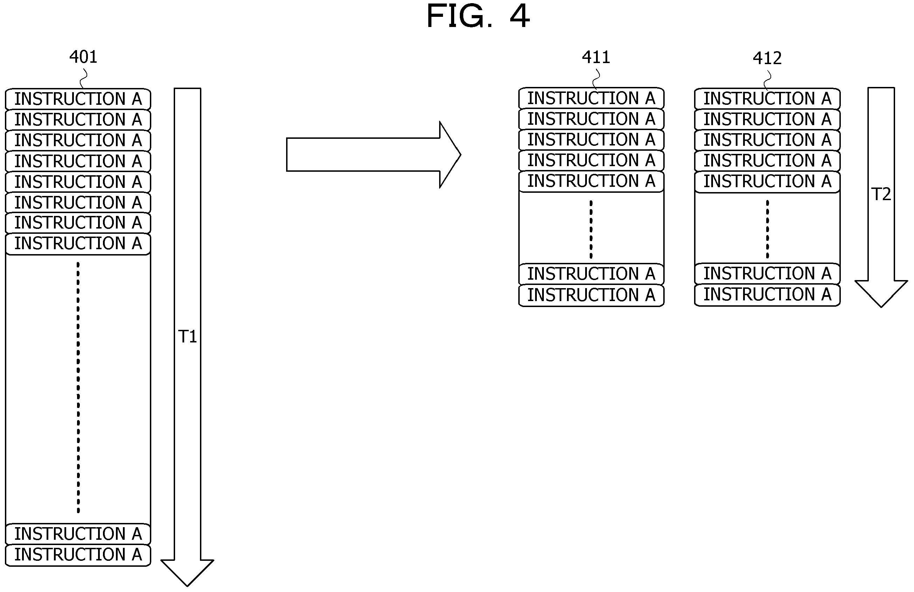

FIG. 4 illustrates an example of processing time when it is assumed that there is no waiting time. Processing time T1 represents the processing time when only the instruction A is executed by one thread 401. Meanwhile, processing time T2 represents the processing time when threads 411 and 412 execute the same process as the thread 401 in parallel. In this case, there is no waiting time of the instruction execution unit 111 that executes the instruction A, and the threads 411 and 412 can execute the instruction A simultaneously. The processing time T2 is approximately half the processing time T1.

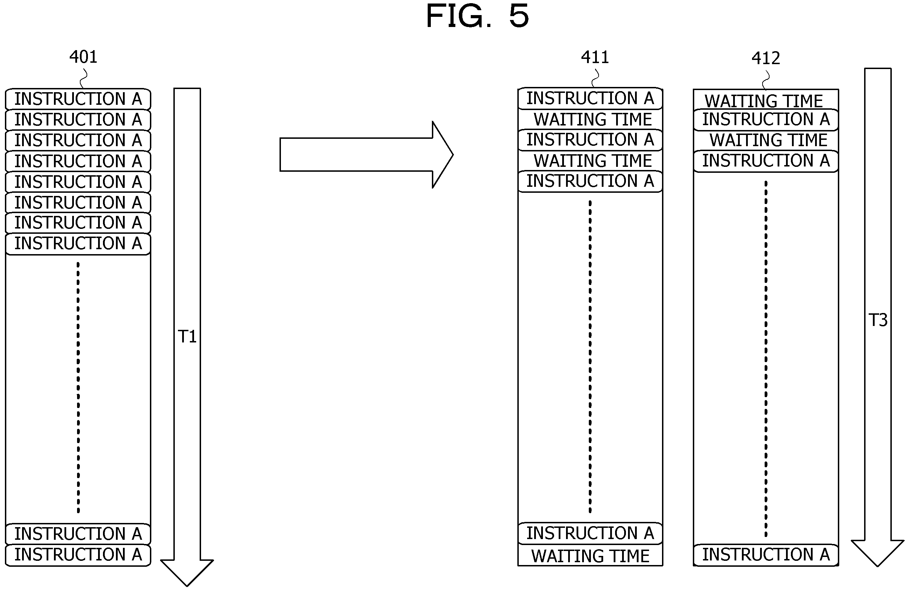

FIG. 5 illustrates an example of processing time when there is waiting time. Processing time T3 represents the processing time when the threads 411 and 412 execute the same process as the thread 401 in parallel. In this case, there is waiting time of the instruction execution unit 111 that executes the instruction A, and only one of the threads 411 and 412 is allowed to execute the instruction A. The processing time T3 is almost the same as the processing time T1, and speed-up by parallel processing is not achieved.

As an example of an application where such events occur, 1:N biometric authentication can be mentioned. In a biometric authentication system that performs the 1:N biometric authentication, a sensor reads biometric information such as the fingerprint, iris, and vein pattern of a person to be authenticated, and coded biometric feature information is generated from the read biometric information. By coding the biometric information, it becomes possible to perform a high-speed comparison (verification) process.

In the comparison process, the biometric feature information on the person to be authenticated is compared with the biometric feature information on many registrants registered in advance in the biometric authentication system, and similarity between the biometric feature information on the person to be authenticated and the biometric feature information on each registrant is calculated. Then, the similarity is compared with a predetermined threshold value, and when there is a registrant having similarity greater than the threshold value, it is determined that the person to be authenticated really is that registrant.

The biometric feature information on tens of thousands to millions of registrants is sometimes registered in the biometric authentication system.

In this case, in order to compare the biometric feature information on many registrants with the biometric feature information on the person to be authenticated in a short time, it is effective to execute the comparison process in parallel with a plurality of threads.

A comparison algorithm for the biometric feature information is common to a plurality of threads executed in parallel, and the comparison process is repeated for the biometric feature information on many registrants. Accordingly, the plurality of threads will repeatedly execute the same instruction. For this reason, situations close to the parallel processing illustrated in FIGs. 3 and 5 frequently occur.

Even when the comparison process is executed by a plurality of threads, if there is no free instruction execution unit, the processing time will not be much enhanced from the case where the comparison process is executed by one thread, and speed-up by the parallel processing will not be achieved.

As illustrated in FIG. 2, when a plurality of threads contains instructions different from each other, by modifying the instruction execution order for each thread, overlap of the instruction execution units used by each thread at the same time point may be lessened. However, in the comparison process for the biometric feature information, since the same instruction execution unit is repeatedly called, it is difficult to lessen overlap of the instruction execution units simply by modifying the instruction execution order.

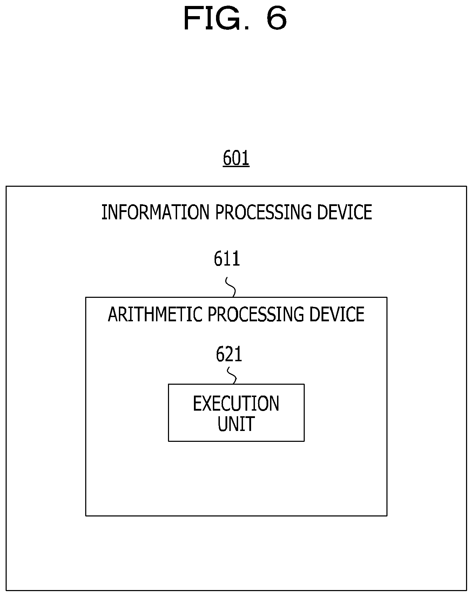

FIG. 6 illustrates a functional configuration example of an information processing device (computer) of the embodiment. An information processing device 601 in FIG. 6 includes an arithmetic processing device 611, and the arithmetic processing device 611 includes an execution unit 621.

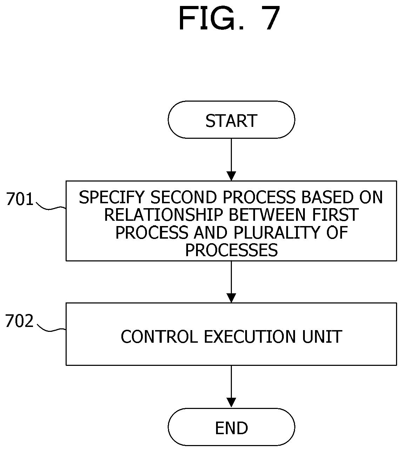

FIG. 7 is a flowchart illustrating an example of a control process performed by the information processing device 601 in FIG. 6. First, in response to a request to generate a predetermined processing result, the arithmetic processing device 611 specifies a second process from among a plurality of processes that each generate the predetermined processing result, based on a relationship between a first process being executed by the execution unit 621 and the plurality of processes (step 701). The second process includes a second instruction different from a first instruction included in the first process. Next, the arithmetic processing device 611 controls the execution unit 621 to execute the second process (step 702).

According to the information processing device 601 in FIG. 6, the occurrence of an instruction waiting to be executed may be suppressed in a process executed by the arithmetic processing device 611.

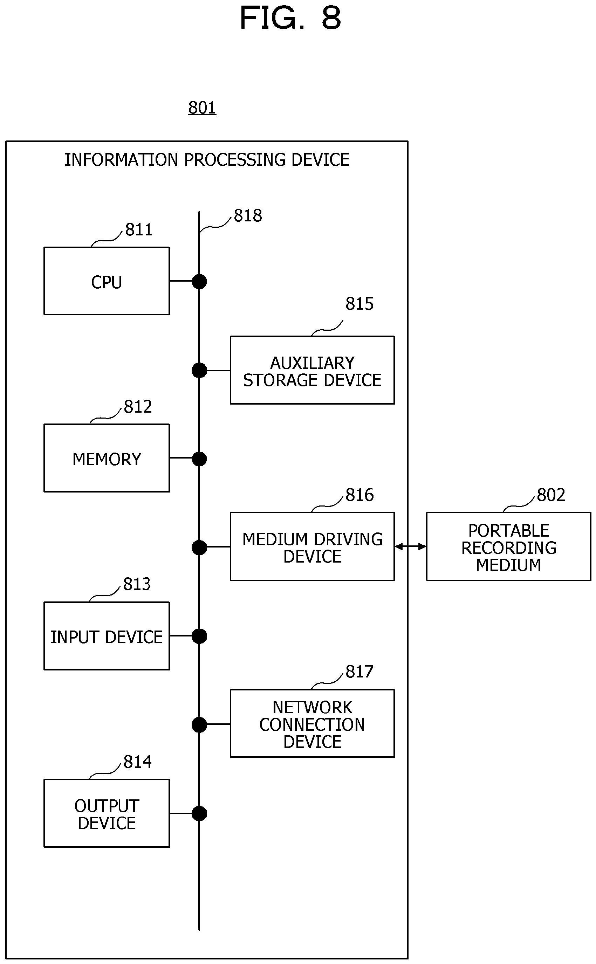

FIG. 8 illustrates a hardware configuration example of the information processing device 601 in FIG. 6. An information processing device 801 in FIG. 8 includes a CPU 811, a memory 812, an input device 813, an output device 814, an auxiliary storage device 815, a medium driving device 816, and a network connection device 817. These constituent elements are hardware and are connected to each other by a bus 818. The information processing device 801 may be, for example, a server included in a biometric authentication system.

The memory 812 is, for example, a semiconductor memory such as a read only memory (ROM), a random access memory (RAM), or a flash memory and stores programs and data used for processing. The CPU 811 (processor) corresponds to the arithmetic processing device 611 in FIG. 6 and uses the memory 812 to execute programs.

For example, the input device 813 is a keyboard, a pointing device, or the like and is used for inputting directions or information from an operator or a user. For example, the output device 814 is a display device, a printer, a speaker, or the like and is used for inquiring of the operator or the user or outputting a processing result. When the information processing device 801 performs the 1:N biometric authentication, the processing result may be an authentication result for the person to be authenticated.

For example, the auxiliary storage device 815 is a magnetic disk device, an optical disk device, a magneto-optical disk device, a tape device, or the like. The auxiliary storage device 815 may be a flash memory or a hard disk drive. The information processing device 801 may store programs and data in the auxiliary storage device 815 and load the stored programs and data into the memory 812 to use.

The medium driving device 816 drives a portable recording medium 802 and accesses the contents recorded in the portable recording medium 802. The portable recording medium 802 is a memory device, a flexible disk, an optical disk, a magneto-optical disk, or the like. The portable recording medium 802 may be a compact disk read only memory (CD-ROM), a digital versatile disk (DVD), a universal serial bus (USB) memory, or the like. The operator or the user may store programs and data in this portable recording medium 802 and load the stored programs and data into the memory 812 to use.

As described above, a computer-readable recording medium that stores programs and data to be used for processing is a physical (non-transitory) recording medium such as the memory 812, the auxiliary storage device 815, or the portable recording medium 802.

The network connection device 817 is a communication interface circuit that is connected to a communication network such as a local area network (LAN) or a wide area network (WAN) and performs data conversion associated with communication. The information processing device 801 may receive programs and data from an external device via the network connection device 817 and load the received programs and data into the memory 812 to use.

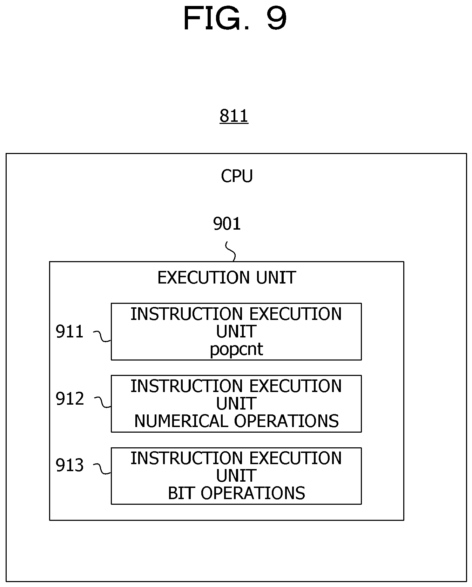

FIG. 9 illustrates a hardware configuration example of the CPU 811 when the information processing device 801 in FIG. 8 performs the 1:N biometric authentication. The CPU 811 in FIG. 9 includes an execution unit 901. The execution unit 901 works as the execution unit 621 in FIG. 6.

The execution unit 901 includes instruction execution units 911 to 913. The instruction execution unit 911 executes an instruction "popcnt", the instruction execution unit 912 executes a numerical operation instruction, and the instruction execution unit 913 executes a bit operation instruction. The execution unit 901 and the instruction execution units 911 to 913 are hardware circuits.

In the information processing device 801 in FIG. 8, a plurality of programs that perform the comparison process for the biometric feature information and generate comparison results is prepared. Each program achieves the same comparison process by using different instruction execution units based on different algorithms from each other. Therefore, even when the plurality of programs is executed in parallel, the probability of waiting time occurring the instruction execution units 911 to 913 is low. The comparison result for the biometric feature information is an example of the predetermined processing result, and the comparison processes achieved by each program are examples of the first process and the second process.

In the 1:N biometric authentication, a request is made to generate comparison results for the biometric feature information in regards to the biometric feature information on each of a plurality of registrants. When a request to generate comparison results for the biometric feature information is made, the CPU 811 selects one program from among the plurality of programs, based on a relationship between the program being executed by the execution unit 901 and the plurality of programs. When a program different from the program being executed is selected, the selected program contains an instruction different from the instruction contained in the program being executed and uses an instruction execution unit different from the instruction execution unit used by the program being executed.

Next, the CPU 811 controls the execution unit 901 to execute the selected program. This suppresses overlap of the instruction execution units used by each program and avoids the occurrence of waiting time in the instruction execution units. Therefore, the occurrence of an instruction waiting to be executed may be suppressed, and the comparison process for the biometric feature information on many registrants may be speeded up.

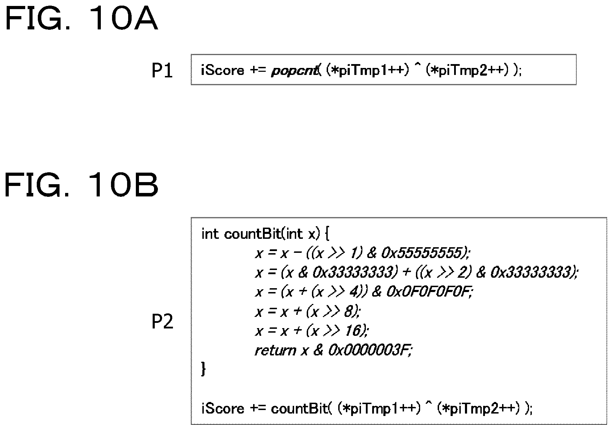

FIG. 10A and FIG. 10B illustrates examples of programs that perform the comparison process for the biometric feature information. FIG. 10A illustrates a program P1, and FIG. 10B illustrates a program P2. The programs P1 and P2 execute the same comparison process and generate the same comparison result iScore, but the combination of instructions contained in the program P2 is different from the combination of instructions contained in the program P1. The similarity between the biometric feature information on the person to be authenticated and the biometric feature information on the registrant is calculated using iScore.

The term (*piTmp1++)^(*piTmp2++) contained in the programs P1 and P2 is a part that calculates the exclusive OR of the biometric feature information on the person to be authenticated and the biometric feature information on the registrant and is common to the two programs. However, the two programs differ from each other in the part that counts the number of logic "1" bits contained in the calculated exclusive OR bit string.

In the program P1, the number of logic "1" bits is counted by executing only one instruction "popcnt". Meanwhile, in the program P2, the same process as the instruction "popcnt" is achieved by complex operations combining numerical operations (addition and subtraction) and bit operations (logical product and bit shift).

The program P1 uses the instruction execution units 911 to 913 in FIG. 9, and the program P2 uses the instruction execution units 912 and 913. Since the program P2 does not use the instruction execution unit 911 that executes the instruction "popcnt", the comparison process may be continued regardless of whether or not the instruction execution unit 911 is in use.

Since the (*piTmp1++)^(*piTmp2++) part is common to the two programs, when the two programs are executed in parallel, there is a possibility that overlap of the instruction execution unit 912 or the instruction execution unit 913 occurs in terms of the processing of this part. However, since the processing time of this part occupies a small proportion of the entire processing time of the comparison process, the probability of overlap occurring at the same time point is low, and even if overlap occurs, the delay due to waiting time is small.

Note that the number of programs that perform the comparison process for the biometric feature information is not limited to two, and three or more programs that generate the same comparison result may be prepared. Also in this case, the combination of instructions contained in each program is different from the combinations of instructions contained in other programs, and each program uses a combination of instruction execution units different from the combinations of the other programs.

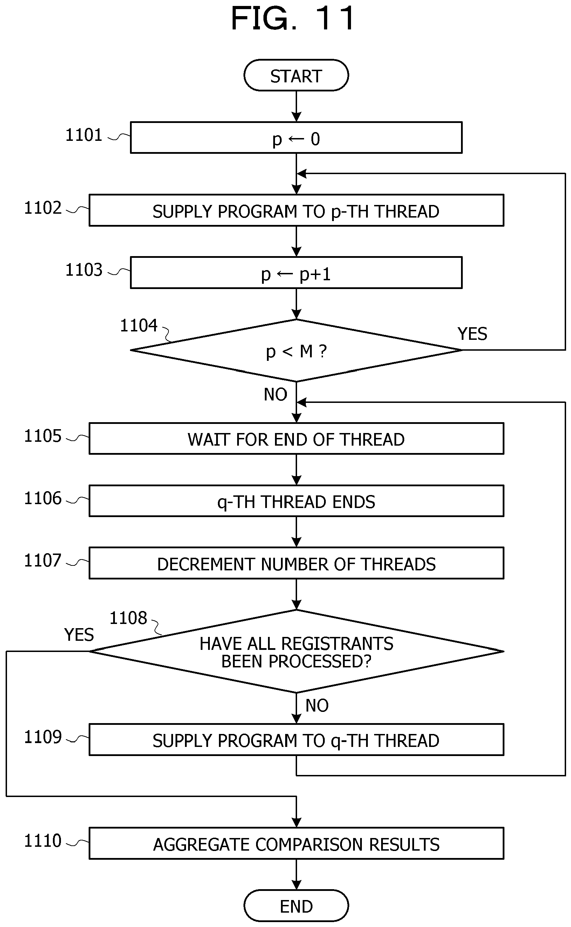

FIG. 11 is a flowchart illustrating an example of the parallel processing performed by the CPU 811 in FIG. 9. The CPU 811 performs the parallel processing in FIG. 11 by executing a control program using the memory 812. In the parallel processing, one of a plurality of programs that generate the same comparison result is supplied to each of a plurality of threads executed in parallel. At this time, in order to make the processing time of the parallel processing shortest, the programs to be supplied to each thread are appropriately selected.

The memory 812 stores a program selection candidate list. The program selection candidate list records average processing time of each of the plurality of programs and the number of threads executing those programs.

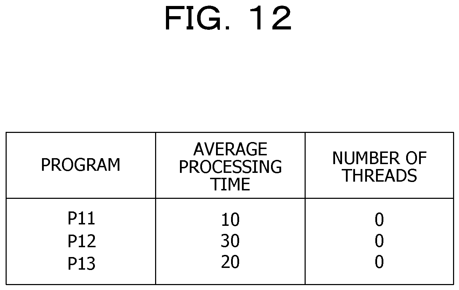

FIG. 12 illustrates an example of the program selection candidate list in an initial state. The program represents a selection candidate program, the average processing time represents the average processing time of the selection candidate program, and the number of threads represents the number of threads executing the selection candidate program.

The average processing time of each program is obtained in advance and recorded in the program selection candidate list. The average processing time may be the time calculated arithmetically from the processing time of the instruction execution unit used by the program, or may be the time measured by experiment. In the initial state, the number of threads for all the programs is set to zero.

In the parallel processing in FIG. 11, first, the CPU 811 sets zero for a control variable p indicating the thread to be executed (step 1101). Next, the CPU 811 supplies any program to a p-th thread in order to compare the biometric feature information on the person to be authenticated and the biometric feature information of any registrant (step 1102). The execution unit 901 uses the instruction execution unit according to the combination of instructions contained in the supplied program to execute the supplied program.

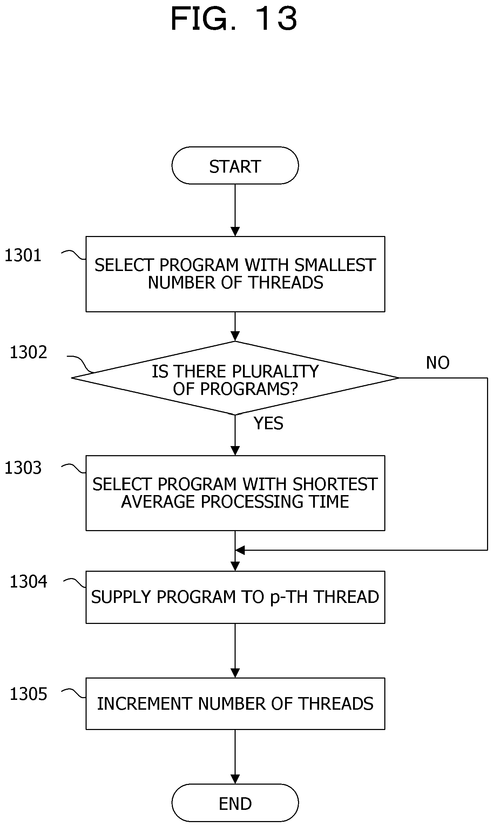

FIG. 13 is a flowchart illustrating an example of a first program supplying process in step 1102 in FIG. 11. First, the CPU 811 selects the program with the smallest number of threads from among the programs recorded in the program selection candidate list (step 1301) and checks whether or not a plurality of programs has been selected (step 1302).

When a plurality of programs has been selected (step 1302, YES), the CPU 811 selects the program with the shortest average processing time from among the selected programs (step 1303). When a plurality of programs has the same average processing time, the CPU 811 randomly selects any program from among these programs. This enables to select one of the programs even when there is a plurality of programs with the smallest number of threads.

Next, the CPU 811 supplies the selected program to the p-th thread (step 1304) and increments the number of threads for the supplied program by one in the program selection candidate list (step 1305). When only one program has been selected (step 1302, NO), the CPU 811 performs the processes from step 1304 onwards.

When only two programs are registered in the program selection candidate list, the processes in steps 1302 and 1303 may be omitted. In this case, in step 1301, an unexecuted program different from the program already being executed is selected from among the two programs.

After supplying the program to the p-th thread, the CPU 811 increments p by one (step 1103) and compares p with M (step 1104). M represents the maximum value of the number of threads that can be executed simultaneously in the CPU 811. When p is smaller than M (step 1104, YES), the CPU 811 repeats the processes from step 1102 onwards. This causes the zeroth to M-1-th threads to be executed in parallel.

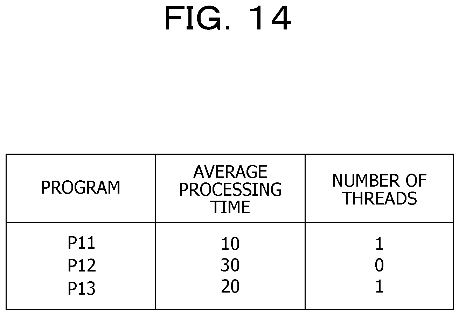

FIG. 14 illustrates an example of the program selection candidate list when two threads are executed in parallel. In this example, programs P11 and P13 are separately supplied to two threads, and the number of threads for the programs P11 and P13 is set to one.

When p reaches M (step 1104, NO), the CPU 811 stands by until the end of execution of any thread (step 1105). Then, when the execution of a q-th (q = 0 to M - 1) thread ends (step 1106), the CPU 811 decrements the number of threads for the program that has been executed by the q-th thread by one in the program selection candidate list (step 1107).

Next, the CPU 811 checks whether or not the biometric feature information on all registrants has been processed (step 1108). When an unprocessed registrant remains (step 1108, NO), the CPU 811 supplies any program to the q-th thread in order to compare the biometric feature information on the person to be authenticated and the biometric feature information on the unprocessed registrant (step 1109). The execution unit 901 uses the instruction execution unit according to the combination of instructions contained in the supplied program to execute the supplied program.

The program supplying process in step 1109 is similar to the program supplying process in FIG. 13. After supplying the program to the q-th thread, the CPU 811 repeats the processes from step 1105 onwards.

When the biometric feature information on all registrants has been processed (step 1108, YES), the CPU 811 aggregates the comparison results for the biometric feature information on all registrants and sorts the registrants in descending order of similarity (step 1110).

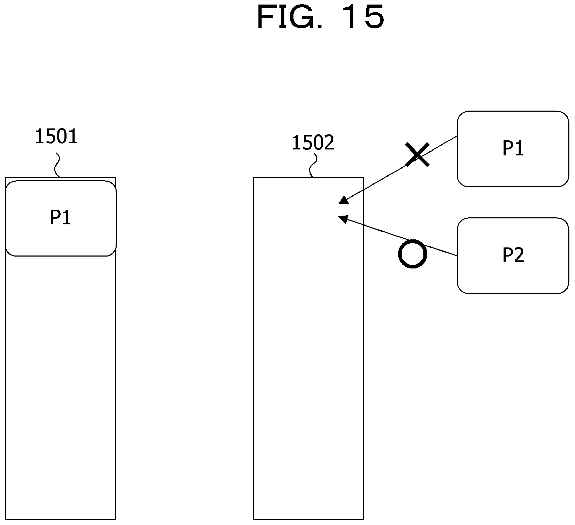

FIG. 15 illustrates an example of the first program supplying process when M = 2 holds and the programs P1 and P2 illustrated in FIG. 10A and FIG. 10B are registered in the program selection candidate list. In this example, the program P1 is already being executed in a thread 1501, and in the program selection candidate list, the number of threads for the program P1 is one, while the number of threads for the program P2 is zero. Therefore, the program P2, which has the smallest number of threads, is selected from among the programs P1 and P2 and supplied to a thread 1502.

Note that, when the program P2 is being executed in the thread 1501, the number of threads for the program P1 is zero, and the number of threads for the program P2 is one in the program selection candidate list. Therefore, the program P1, which has the smallest number of threads, is selected from among the programs P1 and P2 and supplied to the thread 1502.

According to the parallel processing in FIG. 11, among the plurality of programs that generate the same comparison result, the program with the smallest number of threads executing the program is selected and executed. This suppresses overlap of the instruction execution units used by each thread and avoids the occurrence of waiting time in the instruction execution units. Accordingly, the comparison process for the biometric feature information on many registrants may be speeded up.

In addition, since the program supplying process is performed by the CPU 811 executing the control program, new hardware for control does not have to be added, and the hardware amount of the CPU 811 does not increase.

In the parallel processing in FIG. 11, the plurality of programs that perform the same type of processes is executed in parallel, but a program that performs a different type of processes may coexist in the programs executed in parallel.

For example, when a program Q1 that performs a process different from the comparison process for the biometric feature information is being executed in a thread, any program Q2 that perform the comparison process for the biometric feature information is also allowed to be selected and supplied to another thread. In this case, the programs Q1 and Q2 are executed in parallel, the process achieved by the program Q1 corresponds to the first process, and the process achieved by the program Q2 corresponds to the second process.

Next, parallel processing for selecting a program using an instruction usage frequency table instead of the program selection candidate list will be described. In this case, the CPU 811 performs parallel processing similar to the parallel processing in FIG. 11 except the process in step 1107.

The memory 812 stores the instruction usage frequency table for each selection candidate program. The instruction usage frequency table records instructions contained in programs, instruction usage frequencies, and instruction processing time.

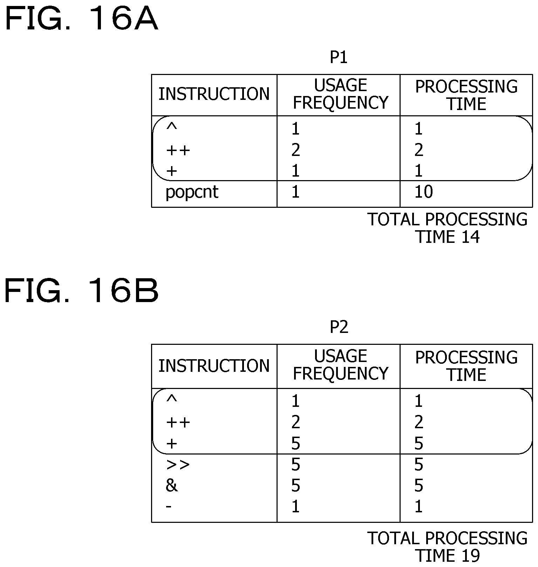

FIG. 16A and FIG. 16B illustrate examples of the instruction usage frequency tables for the programs P1 and P2 illustrated in FIG. 10A and FIG. 10B. The instruction represents an instruction contained in the program, the usage frequency represents the number of instructions, and the processing time represents the processing time when the instruction execution unit executes the instruction.

FIG. 16A illustrates an example of the instruction usage frequency table for the program P1. The program P1 contains an instruction "^", two instructions "++", an instruction "+", and an instruction "popcnt". The instruction "^" is executed by the instruction execution unit 913, the instruction "++" and the instruction "+" are executed by the instruction execution unit 912, and the instruction "popcnt" is executed by the instruction execution unit 911.

The processing time for the instruction "^" is "1", the processing time for the two instructions "++" is "2", the processing time for the instruction "+" is "1", and the processing time for the instruction "popcnt" is "10". Therefore, the total processing time of the program P1 is "14".

FIG. 16B illustrates an example of the instruction usage frequency table for the program P2. The program P2 contains an instruction "^", two instructions "++", five instructions "+", five instructions ">>", five instructions "&", and an instruction "-". The instruction "^", the instruction ">>", and the instruction "&" are executed by the instruction execution unit 913, and the instruction "++", the instruction "+", and the instruction "-" are executed by the instruction execution unit 912.

The processing time for the instruction "^" is "1", the processing time for the two instructions "++" is "2", and the processing time for the five instructions "+" is "5". The processing time for the five instructions ">>" is "5", the processing time for the five instructions "&" is "5", and the processing time for the instruction "-" is "1". Therefore, the total processing time of the program P2 is "19".

The instruction "^", the instruction "++", and the instruction "+" are overlapping instructions commonly contained in the programs P1 and P2.

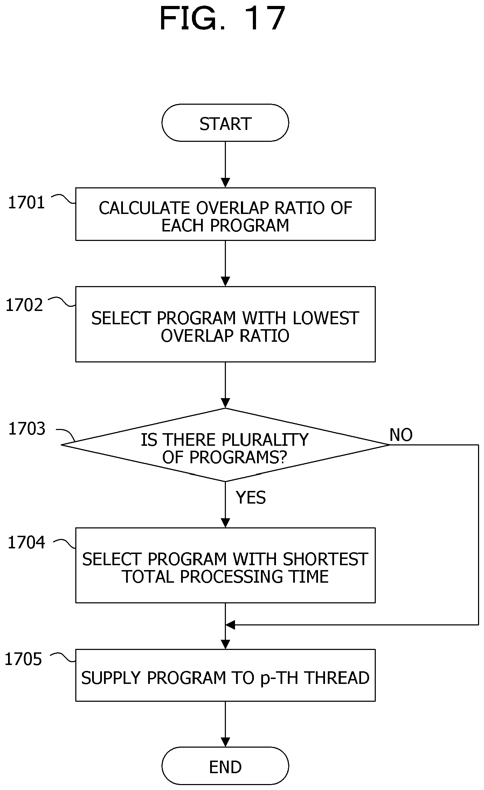

FIG. 17 is a flowchart illustrating an example of a second program supplying process in step 1102 in FIG. 11. First, the CPU 811 refers to the instruction usage frequency table for each of a plurality of selection candidate programs and calculates an overlap ratio R (%) of each program with the following formula (step 1701).

$$R = (TA/TB) \times 100 \quad (1)$$

TA represents the total sum of the processing time of overlapping instructions commonly contained in a program PX already being executed in any thread and a selection candidate program PY, among instructions contained in the program PY. TB represents the total processing time of the program PY. The overlap ratio R represents the ratio of TA to TB. The overlap ratio R is an example of a statistical value regarding instructions overlapping with instructions contained in the first process and indicates the probability of waiting time occurring due to overlap of instruction execution units used by each thread.

For example, when the programs P1 and P2 illustrated in FIG. 10A and FIG. 10B are the selection candidate programs and the program P1 is the program PX being executed, the overlap ratio R of each program is calculated with reference to the instruction usage frequency tables in FIG. 16A and FIG. 16B.

First, when the program PY is the program P1, since all the instructions overlap between the programs PX and PY, the overlap ratio R of the program P1 is calculated by the following formula.

$$R = (14/14) \times 100 = 100 \quad (2)$$

Next, when the program PY is the program P2, since the instruction "^", the instruction "++", and the instruction "+" overlap between the programs PX and PY, the overlap ratio R of the program P2 is calculated by the following formula.

$$R = ((1 + 2 + 5)/19) \times 100 = 42 \quad (3)$$

Meanwhile, when the program PX is the program P2 and the program PY is the program P1, the overlap ratio R of the program P1 is calculated by the following formula.

$$R = (1 + 2 + 1/14) \times 100 = 29 \quad (4)$$

Next, when the program PX is the program P2 and the program PY is the program P2, the overlap ratio R of the program P2 is calculated by the following formula.

$$R = (19/19) \times 100 = 100 \quad (5)$$

The CPU 811 may calculate the overlap ratio R of each program with the following formula.

$$R = (NA/NB) \times 100 \quad (6)$$

NA represents the total sum of the number of overlapping instructions commonly contained in the program PX already being executed in any thread and the selection candidate program PY, among instructions contained in the program PY. NB represents the entire number of instructions contained in the program PY. The overlap ratio R represents the ratio of NA to NB.

Note that, when p = 0 holds, since none of the programs are being executed, the CPU 811 sets the overlap ratio R of each program to the same value.

Next, the CPU 811 selects the program with the lowest overlap ratio R from among the plurality of selection candidate programs (step 1702) and checks whether or not a plurality of programs has been selected (step 1703).

When a plurality of programs has been selected (step 1703, YES), the CPU 811 selects the program with the shortest total processing time from among the selected programs (step 1704). When a plurality of programs has the same total processing time, the CPU 811 randomly selects any program from among these programs. This enables to select one of the programs even when there is a plurality of programs with the lowest overlap ratio R.

Next, the CPU 811 supplies the selected program to the p-th thread (step 1705). When only one program has been selected (step 1703, NO), the CPU 811 performs the process in step 1705.

The program supplying process in step 1109 is similar to the program supplying process in FIG. 17.

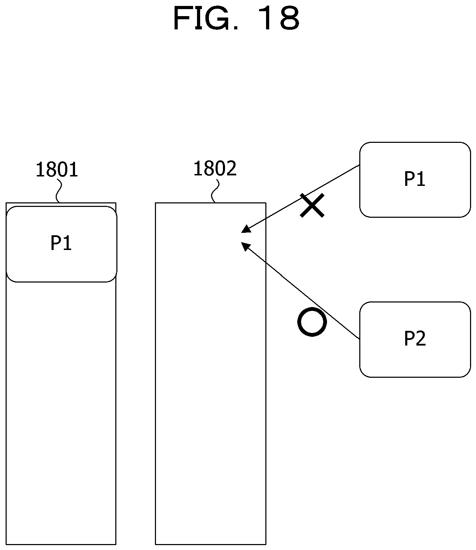

FIG. 18 illustrates an example of the second program supplying process when the programs P1 and P2 illustrated in FIG. 10A and FIG. 10B are selection candidate programs and the program P1 is the program PX being executed. In this example, the program P1 is already being executed in a thread 1801, and as indicated by formulas (2) and (3), the program P1 has an overlap ratio R of 100%, while the program P2 has an overlap ratio R of 42%. Therefore, the program P2, which has the lowest overlap ratio R, is selected from among the programs P1 and P2 and supplied to a thread 1802.

Note that, when the program P2 is being executed in the thread 1801, the program P1 has an overlap ratio R of 29%, and the program P2 has an overlap ratio R of 100%, as indicated by formulas (4) and (5). Therefore, the program P1, which has the lowest overlap ratio R, is selected from among the programs P1 and P2 and supplied to the thread 1802.

In step 1701, when a plurality of programs has already been executed, the CPU 811 may calculate the overlap ratio R using each program being executed as the program PX and obtain a statistical value of the overlap ratios R for each of the plurality of programs PX. As the statistical value of the overlap ratios R, an average value, a total sum, a median value, or the like can be used. In this case, in step 1702, the CPU 811 selects the program with the smallest statistical value of the overlap ratios R from among the plurality of selection candidate programs.

According to the parallel processing that selects a program using the instruction usage frequency table, among a plurality of programs that generate the same comparison result, the program with a smaller number of instructions overlapping with instructions of the program being executed is selected and executed. This suppresses overlap of the instruction execution units used by each thread and avoids the occurrence of waiting time in the instruction execution units. Accordingly, the comparison process for the biometric feature information on many registrants may be speeded up.

The configurations of the information processing device 601 in FIG. 6 and the information processing device 801 in FIG. 8 are merely examples, and some constituent elements may be omitted or modified according to the use or conditions of the information processing device. For example, the arithmetic processing device 611 in FIG. 6 may be a processor such as a graphics processing unit (GPU) or a digital signal processor (DSP).

In the information processing device 801 in FIG. 8, when an interface with the operator or the user is not desired, the input device 813 and the output device 814 may be omitted. When the information processing device 801 does not use the portable recording medium 802 or the communication network, the medium driving device 816 or the network connection device 817 may be omitted.

The configurations of the CPU 101 in FIG. 1 and the CPU 811 in FIG. 9 are merely examples, and some constituent elements may be omitted or modified according to the use or conditions of the information processing device. For example, the execution unit 901 in FIG. 9 may include four or more instruction execution units.

The flowcharts in FIGs. 7, 11, 13, and 17 are merely examples, and some processes may be omitted or modified according to the configuration or conditions of the information processing device. The information processing device 801 also can perform parallel processing other than the comparison process for the biometric feature information in the 1:N biometric authentication.

The parallel processing illustrated in FIGs. 2 to 5 is merely an example, and the number of threads executed in parallel and the types of instructions change according to the programs supplied to the threads. The programs illustrated in FIG. 10A and FIG. 10B are merely examples, and the programs supplied to the threads change according to the use of the information processing device.

The program selection candidate lists illustrated in FIGs. 12 and 14 are merely examples, and the program selection candidate list changes according to the programs supplied to the threads. The program supplying processes illustrated in FIGs. 15 and 18 are merely examples, and the number of threads and programs executed in parallel changes according to the use of the information processing device. The instruction usage frequency tables illustrated in FIG. 16A and FIG. 16B are merely examples, and the instruction usage frequency table changes according to the programs supplied to the threads.

Calculation formulas (1) to (6) are merely examples, and the information processing device 801 may calculate the overlap ratio R using another calculation formula.

While the disclosed embodiments and the advantages thereof have been described in detail, those skilled in the art will be able to make various modifications, additions, and omissions without departing from the scope of the present invention explicitly set forth in the claims.

**Claims**

1. A control method to be executed by a computer, comprising:

in response to a request to generate a predetermined processing result, specifying a second process that includes a second instruction different from a first instruction included in a first process that is being executed by an execution unit of an arithmetic processing device, from among a plurality of processes that each generate the predetermined processing result, based on a relationship between the first process and the plurality of processes; and controlling the execution unit to execute the second process.

2. The control method according to claim 1, wherein the execution unit includes a first instruction execution unit that executes the first instruction, and a second instruction execution unit that executes the second instruction.

3. The control method according to claim 1 or 2, wherein

the first process is any process among the plurality of processes, and
the specifying the second process includes specifying the processes with a smallest number of threads that are being executed by the execution unit, as the second process, from among the plurality of processes.

4. The control method according to claim 3, wherein the specifying the processes with the smallest number of threads as the second process includes specifying the processes with shortest processing time, as the second process, from among the plurality of processes with the smallest number of threads.

5. The control method according to claim 1 or 2, wherein the specifying the second process includes: obtaining a statistical value regarding instructions that overlap with the instructions included in the first process, among the instructions included in each of the plurality of processes; and specifying the processes with the statistical value that is smallest, as the second process, from among the plurality of processes.

6. The control method according to claim 5, wherein the specifying the processes with the statistical value that is smallest, as the second process, includes specifying the processes with shortest processing time, as the second process, from among the plurality of processes with the statistical value that is smallest.

7. An information processing device comprising a control unit configured to:

in response to a request to generate a predetermined processing result, specify a second process that includes a second instruction different from a first instruction included in a first process that is being executed by an execution unit of an arithmetic processing device, from among a plurality of processes that each generate the predetermined processing result, based on a relationship between the first process and the plurality of processes, and
control the execution unit to execute the second process.

8. The information processing device according to claim 7, wherein the execution unit includes a first instruction execution unit that executes the first instruction, and a second instruction execution unit that executes the second instruction.

9. The information processing device according to claim 7 or 8, wherein

   the first process is any process among the plurality of processes, and
   the execution unit is further configured to specify the processes with a smallest number of threads that are being executed by the execution unit, as the second process, from among the plurality of processes.

10. The information processing device according to claim 7 or 8, wherein the execution unit is further configured to:

    obtain a statistical value regarding instructions that overlap with the instructions included in the first process, among the instructions included in each of the plurality of processes, and
    specify the processes with the statistical value that is smallest, as the second process, from among the plurality of processes.

11. A control program that causes a computer to execute a process, the process comprising:

    in response to a request to generate a predetermined processing result, specifying a second process that includes a second instruction different from a first instruction included in a first process that is being executed by an execution unit of an arithmetic processing device, from among a plurality of processes that each generate the predetermined processing result, based on a relationship between the first process and the plurality of processes; and
    controlling the execution unit to execute the second process.

12. The control program according to claim 11, wherein the execution unit includes a first instruction execution unit that executes the first instruction, and a second instruction execution unit that executes the second instruction.

13. The control program according to claim 11 or 12, wherein

    the first process is any process among the plurality of processes, and
    the specifying the second process includes specifying the processes with a smallest number of threads that are being executed by the execution unit, as the second process, from among the plurality of processes.

14. The control program according to claim 11 or 12, wherein the specifying the second process includes: obtaining a statistical value regarding instructions that overlap with the instructions included in the first process, among the instructions included in each of the plurality of processes; and specifying the processes with the statistical value that is smallest, as the second process, from among the plurality of processes.

# FIG. 1

101

CPU

111 — INSTRUCTION EXECUTION UNIT
INSTRUCTION A

112 — INSTRUCTION EXECUTION UNIT
INSTRUCTION B

113 — INSTRUCTION EXECUTION UNIT
INSTRUCTION C

114 — INSTRUCTION EXECUTION UNIT
INSTRUCTION Z

# FIG. 2

201 — ACTIVATE THREADS

PARALLEL PROCESSING

211

212

202

| INSTRUCTION A | INSTRUCTION B |
| INSTRUCTION C | INSTRUCTION A |
| INSTRUCTION Z | INSTRUCTION C |
| INSTRUCTION A | INSTRUCTION B |
| INSTRUCTION A | INSTRUCTION B |

| INSTRUCTION B | INSTRUCTION C |
| INSTRUCTION A | INSTRUCTION C |

203 — INTEGRATE PROCESSING RESULTS

EP 4 170 487 A1

# FIG. 3

301 — ACTIVATE THREADS

PARALLEL PROCESSING

311

302

| INSTRUCTION A |
| WAITING TIME |
| INSTRUCTION A |
| WAITING TIME |
| INSTRUCTION A |
| ⋮ |
| INSTRUCTION A |

312

| WAITING TIME |
| INSTRUCTION A |
| WAITING TIME |
| INSTRUCTION A |
| WAITING TIME |
| INSTRUCTION A |
| ⋮ |
| INSTRUCTION A |

303 — INTEGRATE PROCESSING RESULTS

# FIG. 4

401

| INSTRUCTION A |
| INSTRUCTION A |
| INSTRUCTION A |
| INSTRUCTION A |
| INSTRUCTION A |
| INSTRUCTION A |
| INSTRUCTION A |
| INSTRUCTION A |

⋮

| INSTRUCTION A |
| INSTRUCTION A |

T1

411

| INSTRUCTION A |
| INSTRUCTION A |
| INSTRUCTION A |
| INSTRUCTION A |
| INSTRUCTION A |

⋮

| INSTRUCTION A |
| INSTRUCTION A |

412

| INSTRUCTION A |
| INSTRUCTION A |
| INSTRUCTION A |
| INSTRUCTION A |
| INSTRUCTION A |

⋮

| INSTRUCTION A |
| INSTRUCTION A |

T2

# FIG. 5

401

| INSTRUCTION A |
| INSTRUCTION A |
| INSTRUCTION A |
| INSTRUCTION A |
| INSTRUCTION A |
| INSTRUCTION A |
| INSTRUCTION A |
| INSTRUCTION A |

⋮

| INSTRUCTION A |
| INSTRUCTION A |

T1

411

| INSTRUCTION A |
| WAITING TIME |
| INSTRUCTION A |
| WAITING TIME |
| INSTRUCTION A |

⋮

| INSTRUCTION A |
| WAITING TIME |

412

| WAITING TIME |
| INSTRUCTION A |
| WAITING TIME |
| INSTRUCTION A |

⋮

| INSTRUCTION A |

T3

# FIG. 6

<u>601</u>

INFORMATION PROCESSING DEVICE

611

ARITHMETIC PROCESSING DEVICE

621

EXECUTION
UNIT

# FIG. 7

```
        ┌─────────────┐
        │    START    │
        └──────┬──────┘
               │
               ▼
      ┌─────────────────────────────┐
701   │ SPECIFY SECOND PROCESS BASED ON │
      │ RELATIONSHIP BETWEEN FIRST      │
      │ PROCESS AND PLURALITY OF        │
      │ PROCESSES                       │
      └──────────────┬──────────────┘
                     │
                     ▼
      ┌─────────────────────────────┐
702   │    CONTROL EXECUTION UNIT    │
      └──────────────┬──────────────┘
                     │
                     ▼
            ┌─────────────┐
            │     END     │
            └─────────────┘
```

# FIG. 8

801

INFORMATION PROCESSING DEVICE

811

CPU

818

815

AUXILIARY
STORAGE DEVICE

812

MEMORY

816

MEDIUM DRIVING
DEVICE

802

PORTABLE
RECORDING
MEDIUM

813

INPUT DEVICE

817

NETWORK
CONNECTION
DEVICE

814

OUTPUT
DEVICE

# FIG. 9

811

CPU

901

EXECUTION UNIT

911 — INSTRUCTION EXECUTION
UNIT
popcnt

912 — INSTRUCTION EXECUTION
UNIT
NUMERICAL OPERATIONS

913 — INSTRUCTION EXECUTION
UNIT
BIT OPERATIONS

# FIG. 10A

P1

```
iScore += popcnt( (*piTmp1++) ^ (*piTmp2++) );
```

# FIG. 10B

P2

```
int countBit(int x) {
        x = x - ((x >> 1) & 0x55555555);
        x = (x & 0x33333333) + ((x >> 2) & 0x33333333);
        x = (x + (x >> 4)) & 0x0F0F0F0F;
        x = x + (x >> 8);
        x = x + (x >> 16);
        return x & 0x0000003F;
}

iScore += countBit( (*piTmp1++) ^ (*piTmp2++) );
```

# FIG. 11

START

1101 — p ← 0

1102 — SUPPLY PROGRAM TO p-TH THREAD

1103 — p ← p+1

1104 — p < M ?    YES

NO

1105 — WAIT FOR END OF THREAD

1106 — q-TH THREAD ENDS

1107 — DECREMENT NUMBER OF THREADS

1108 — HAVE ALL REGISTRANTS BEEN PROCESSED?    YES

NO

1109 — SUPPLY PROGRAM TO q-TH THREAD

1110 — AGGREGATE COMPARISON RESULTS

END

# FIG. 12

| PROGRAM | AVERAGE PROCESSING TIME | NUMBER OF THREADS |
|---------|-------------------------|-------------------|
| P11 | 10 | 0 |
| P12 | 30 | 0 |
| P13 | 20 | 0 |

# FIG. 13

START

1301 SELECT PROGRAM WITH SMALLEST
NUMBER OF THREADS

1302 IS THERE PLURALITY
OF PROGRAMS?

NO

YES

1303 SELECT PROGRAM WITH SHORTEST
AVERAGE PROCESSING TIME

1304 SUPPLY PROGRAM TO p-TH THREAD

1305 INCREMENT NUMBER OF THREADS

END

# FIG. 14

| PROGRAM | AVERAGE PROCESSING TIME | NUMBER OF THREADS |
|---------|-------------------------|-------------------|
| P11     | 10                      | 1                 |
| P12     | 30                      | 0                 |
| P13     | 20                      | 1                 |

# FIG. 15

EP 4 170 487 A1

# FIG. 16A

P1

| INSTRUCTION | USAGE FREQUENCY | PROCESSING TIME |
|---|---|---|
| ^ | 1 | 1 |
| ++ | 2 | 2 |
| + | 1 | 1 |
| popcnt | 1 | 10 |

TOTAL PROCESSING
TIME 14

# FIG. 16B

P2

| INSTRUCTION | USAGE FREQUENCY | PROCESSING TIME |
|---|---|---|
| ^ | 1 | 1 |
| ++ | 2 | 2 |
| + | 5 | 5 |
| >> | 5 | 5 |
| & | 5 | 5 |
| - | 1 | 1 |

TOTAL PROCESSING
TIME 19

# FIG. 17

```
        START
          │
          ▼
```
1701 — CALCULATE OVERLAP RATIO OF
       EACH PROGRAM
```
          │
          ▼
```
1702 — SELECT PROGRAM WITH LOWEST
       OVERLAP RATIO
```
          │
          ▼
```
1703 — IS THERE PLURALITY OF PROGRAMS? ——NO——┐
```
          │ YES                                │
          ▼                                    │
```
1704 — SELECT PROGRAM WITH SHORTEST
       TOTAL PROCESSING TIME
```
          │                                    │
          ▼◄───────────────────────────────────┘
```
1705 — SUPPLY PROGRAM TO p-TH THREAD
```
          │
          ▼
        END
```

# FIG. 18

## INTERNATIONAL SEARCH REPORT

International application No.

PCT/JP2020/024186

### A. CLASSIFICATION OF SUBJECT MATTER
G06F 9/50(2006.01)i
FI: G06F9/38 370A; G06F9/50 150C

According to International Patent Classification (IPC) or to both national classification and IPC

### B. FIELDS SEARCHED
Minimum documentation searched (classification system followed by classification symbols)
G06F9/38; G06F9/46-9/54; G06F15/16-15/177

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
IEEE Xplore

### C. DOCUMENTS CONSIDERED TO BE RELEVANT

| Category* | Citation of document, with indication, where appropriate, of the relevant passages | Relevant to claim No. |
|---|---|---|
| A | JP 2011-141756 A (YOKOGAWA ELECTRIC CORP.) 21 July 2011 (2011-07-21) paragraphs [0013], [0032]-[0043], fig. 1, 2 | 1-14 |
| A | JP 62-233874 A (NEC CORP.) 14 October 1987 (1987-10-14) page 1, lower left column, lines 4-16, page 2, upper right column, line 1 to page 2, lower left column, line 8, fig. 1 | 1-14 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 August 2020 (18.08.2020) | 01 September 2020 (01.09.2020) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2020/024186

| Patent Documents referred in the Report | Publication Date | Patent Family | Publication Date |
|---|---|---|---|
| JP 2011-141756 A | 21 Jul. 2011 | (Family: none) | |
| JP 62-233874 A | 14 Oct. 1987 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019160352 A